**Europäisches Patentamt**

**European Patent Office**

**Office européen des brevets**

(11) Veröffentlichungsnummer: **0 242 872**
**A1**

(12) **EUROPÄISCHE PATENTANMELDUNG**

(21) Anmeldenummer: **87105911.9**

(22) Anmeldetag: **22.04.87**

(51) Int. Cl.³: **C 03 B 19/08**
C 03 B 5/00, C 03 C 11/00
C 04 B 5/06, C 04 B 38/02
C 04 B 20/04

(30) Priorität: 08.01.87 DE 3700382
23.04.86 DE 3613670
13.05.86 DE 3616110

(43) Veröffentlichungstag der Anmeldung:
28.10.87 Patentblatt 87/44

(84) Benannte Vertragsstaaten:
AT BE CH DE ES FR GB GR IT LI NL SE

(71) Anmelder: Pieper, Helmut Dipl.-Ing.
Buchenstrasse 19
D-8770 Lohr/Main(DE)

(72) Erfinder: Pieper, Helmut Dipl.-Ing.
Buchenstrasse 19
D-8770 Lohr/Main(DE)

(74) Vertreter: Patentanwälte Schulze Horn und Hoffmeister
Goldstrasse 36
D-4400 Münster(DE)

(54) Verfahren zum Aufschäumen von glasbildenden mineralischen Stoffen, insbesondere Flugaschen etc., sowie Ofen zur Durchführung dieses Verfahrens.

(57) Verfahren zum Aufschäumen von glasbildenden Mineralstoffen, insbesondere Abfallstoffen wie z. B. Flugaschen, Schlick, Kiesschlamm, Flotationsrückständen, Müllaschen etc., wobei eine Mischung aus diesen Stoffen und 0,5 - 3 Gew.-% Ferrosiliziumnitrid bei einer Temperatur von mehr als 1000 und unter 1300° C aufschäumt und Ofen zur Durchführung dieses Verfahrens.

Fig.1

EP 0 242 872 A1

Croydon Printing Company Ltd.

Die Erfindung betrifft ein Verfahren zum Aufschäumen von glasbildenden mineralischen Stoffen, insbesondere Abfallstoffen wie Flugaschen, Schlick, Kiesschlamm, Flotationsrückständen, Müllaschen etc., die in großen Mengen anfallen sowie einen Ofen zur Durchführung dieses Verfahrens.

Eine Wiederverwendung der vorgenannten Stoffe ist nur begrenzt möglich und die sonst erforderliche Deponie dieser Stoffe ist mit hohen Aufwendungen verbunden. Insgesamt kann sogar gesagt werden, daß die Verwertung bzw. Beseitigung dieser Abfallstoffe mit erheblichen, umweltbelastenden Problemen verbunden ist.

Es ist demgegenüber Aufgabe der Erfindung, ein Verfahren und einen Ofen zu schaffen, welches diese Abfallstoffe als wertvollen Grundstoff einer Weiterverwendung zuführen können.

Das erfindungsgemäße Verfahren soll imstande sein, aus den glasbildenden Abfallstoffen zu Bauzwecken oder als Betonzuschlagstoff verwendbare Strukturkörper zu schaffen, die leicht sind, wirtschaftlich herstellbar sein sollen und die insbesondere als Isolationskörper auch bei sehr hohen Temperaturen von mehr als 1000° C verwendbar sein können.

Diese Aufgabe wird erfindungsgemäß dadurch gelöst, daß den Abfallstoffen Ferrosiliziumnitrid zugemischt wird und das Gemisch bei Erweichungstemperatur der Abfallstoffe aufgeschäumt wird.

Diese Erweichungstemperatur liegt über 1000° und unter 1300 ° C, vorteilhaft beträgt sie ca. 1000 - 1250° C.

Es ist für den Fachmann überraschend, daß nicht nur das Aufschäumen von glasbildenden Abfallstoffen zu Strukturkörpern möglich ist, wobei diese Strukturkörper nachträglich durch Schneiden in jede gewünschte Form gebracht werden können, sondern insbesondere, daß die erzeugten Schaumstrukturkörper eine sehr geringe Dichte aufweisen, die zwischen 0,20 und 0,80 g/cm$^3$ liegen kann. Für den Fachmann überraschend weisen die erfindungsgemäß erzeugten Strukturkörper eine sehr hohe Druckfestigkeit auf und da sie praktisch keinen oder einen sehr geringen Alkaligehalt aufweisen, sind sie als Betonzuschlagstoffe besonders geeignet, da sie als betonverträglich bezeichnet werden können.

Es ist weiterhin Aufgabe der Erfindung, einen Schäumofen zu schaffen, bei welchem die bekannten Nachteile nicht mehr vorhanden sind und der es erlaubt, großtechnisch und störungsfrei Mineralstoff-Schaumgranulat zu erzeugen. Das erfindungsgemäße Verfahren soll wirtschaftlich und störungsfrei durchführbar sein und geschlossenporiges Schaumgranulat erzeugen, bei welchem weiterhin eine geschlossene Oberfläche vorliegt. Die zu erzeugenden Partikel weisen ein Raumgewicht von 0,2 - 0,8 g/cm$^3$ auf.

Erstmals soll mit dem erfindungsgemäßen Verfahren und dem erfindungsgemäßen Ofen großtechnisch die Möglichkeit überhaupt geschaffen werden, im kontinuierlichen Verfahren die Herstellung der genannten Granulatkörnchen zu ermöglichen.

Weitere Ausgestaltungen des erfindungsgemäßen Verfahrens und die Ausgestaltung des Ofens sind in den Unteransprüchen genannt.

Ausführungsbeispiele der Erfindung werden im folgenden anhand der Figuren beschrieben. Es zeigen:

Figur 1 schematisch einen Längsschnitt des erfindungsgemäßen Ofens,

Figur 2 einen Querschnitt durch die Schäumzone des erfindungsgemäßen Ofens und

Figur 3 einen Querschnitt durch die Kühl- oder die Erhitzungszone des erfindungsgemäßen Ofens.

Der erfindungsgemäße Ofen zur Herstellung von Granulat aus insbesondere Flugasche besteht aus einem äußeren isolierten und einem inneren Mantel, die sich gegenseitig durch Elemente 11 oder eine Isolierung abstützen.

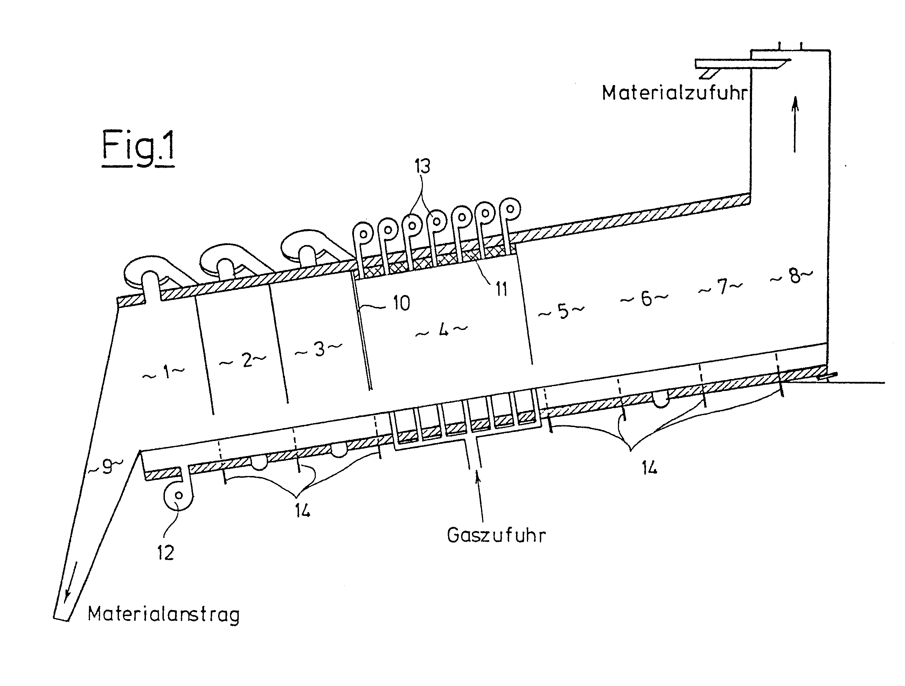

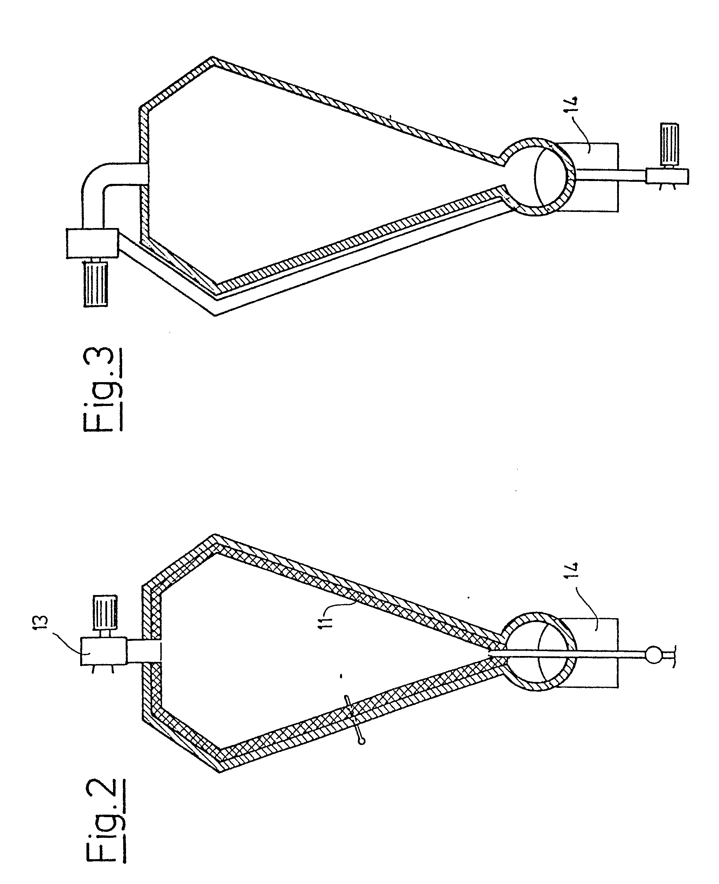

Gemäß den Figuren 1 und 2 ist dabei die Abstützung durch die Isolation in der Kühlzone 1 - 3 und der Erhitzungszone 5 - 7 gegeben, während in der eigentlichen Schäumzone 4 zwischen den Mänteln nadelartige Stützelemente 11 vorliegen.

Während innerhalb der Kühlzone 1 - 3 gleiche Drücke vorliegen, verringert sich innerhalb des Ofens von der Schäumzone 4 bis zum äußeren Erhitzungszonenbereich 7 der Druck kontinuierlich, so daß die Verbrennungsgase ausströmen können und innerhalb der Erhitzungszone 5 - 7 die eingegebenen Pellets im Gegenstrom aufheizen. Die Pellets treten in einer Abzugs- oder Exhaustor-Zone 8 in den Ofen ein, durchlaufen dann die Erhitzungszone 5 - 7, werden innerhalb der Schäumzone 4 aufgeschäumt und dann innerhalb der Kühlzonen 1 - 3 abgekühlt. Der Materialaustrag erfolgt dann innerhalb einer Schütte 9.

Innerhalb der Kühlzonen wird die Kühlluft durch Gebläse 12 umgewälzt, während in der Schäumzone sowohl Verbrennungsluft über Gebläse 13 als auch Gas zugeführt wird. Die Verbrennungsluft durchströmt dabei den Doppelmantel, bevor sie unten in den Ofenraum eintritt und dort mit dem ebenfalls von unten zugeführten Gas verbrennt und dabei die Temperatur bis auf Schäumtemperatur ansteigen läßt.

Die Verbrennungsgase strömen dann durch die Erhitzungszonen 5 - 7 zur Exhauster-Zone 8, in welcher das zu schäumende Material in Form grüner Pellets zugeführt wird. Dabei findet in der Exhaustor-Zone 8 bereits eine gewisse Vorwerärmung statt.

Innerhalb des Ofens sind Wärmeschutzwände 10 angeordnet, die beidseitig die Schäumzone 4 begrenzen und weiterhin auch innerhalb der Kühl- und Erhitzungszone vorliegen, wodurch ein Wärmeaustausch durch Strahlung in Längsrichtung des Ofens verhindert wird.

Der Ofenboden des länglichen, im Schnitt V-förmigen Ofenraums, wird durch einen Kanal gebildet, der durch einen Schlitz mit dem eigentlichen Ofenraum in Verbindung steht und in den die Kühlluft die Verbrennungsluft und das Verbrennungsgas eingeleitet wird, wodurch die Längsverteilung der Medien durch Schieber 14 geregelt werden kann.

Der Ofen ist zu seinem Austragende hin geneigt angeordnet, wobei die Größenordnung der Neigung einstellbar ist, um je nach Material die günstigste Verweilzeit des zu schäumenden Materials einstellen zu können.

Die Strahlenschutzwände 10 weisen an ihren unteren Enden Durchlüsse auf bzw. sind nicht bis zum Ofenboden durchgeführt, so daß dort der Gas- und materialstrom ungehindert fließen kann.

Bei dem erfindungsgemäßen Ofen ist weiterhin zu beachten, daß er innerhalb seiner Schäumzone 4 über dem V-Förmigen Teil einen Oberbau aufweist, dessen Größe mindestens dem des V-förmigen Teils entspricht, um eine ausreichende Verweilzeit für die zu schäumenden Teilchen zu ermöglichen.

Das erfindungsgemäße Verfahren wird derart ausgeführt, daß nach Mischung von fein vorliegenden oder feingemahlenen mineralischen Abfallstoffen mit 0,5 - 3 Gew.-% Ferrosiliziumnitrid die Mischung bei Temperaturen von 1000 - 1300° C aufgeschäumt wird.

Es hat sich gezeigt, daß Flugasche aus der letzten Stufe der Filterung besonders leicht zu schäumen ist, die Flugasche aus anderen Stufen der Filgerung bzw. Mischungen der Flugasche aus verschiedenen Filterungsstufen sind ebenfalls, wenn auch unter Umständen bei leicht abweichenden Temperaturen, schäumbar. Die Schäumtemperatur ist je nach der Art der Flugasche, die in Abhängigkeit von der verwendeten Kohle verschiedene Zusammensetzung hat, einzustellen. Sie liegt aber generell über 1000° und unter 1300° C, z. B. zwischen 1100 und 1250° C.

Es ist erfindungswesentlich, daß die Schäumtemperatur, die empirisch je nach Art des Abfallstoffes zu bestimmen ist, genau eingehalten wird. Dabei reagiert das Ferrosiliziumnitrid mit der Glasphase, sobald diese die entsprechende Viskosität erreicht hat. Dadurch kann mit dem gleichen Schäummittel bei unterschiedlichen Temperaturen gearbeitet werden, weil die Gasbildung durch Reaktion und nicht durch Dissoziation erfolgt. Unterhalb der Schäumtemperatur sind die Abfallstoffe noch nicht genügend erweicht, oberhalb der sehr kleinen Spanne der Schäumtemperatur sind die Abfallstoffe aber bereits so flüssig, daß das entstandene Gas entweicht, ohne die gewünschten Poren zu bilden.

Das Gemisch aus Abfallstoffen und den genannten 0,5 - 3 Gew.-% Ferrosiliziumnitrid (je nach Art der Stoffe können auch abweichende Gewichtsanteile des Schäummittels verwendet werden) wird in kurzzeitig der ermittelten Schäumtemperatur ausgesetzt. Nach dem Aufschäumen wird sehr rasch die Temperatur erniedrigt und danach wird der erzeugte Schaum- oder Strukturkörper isoliert und sich selbst überlassen, um langsam abzukühlen. Eine Abkühlung in einem speziellen Kühlofen ist im Gegensatz zur Herstellung von Schaumglas nicht erforderlich, da der erzeugte Strukturkörper einen sehr niedrigen Ausdehnungskoeffizienten aufweist.

Die erzeugten Strukturkörper können nach Schneiden in jede gewünschte Form (Platte) gebracht werden und als Baumaterial, als Isolationsmaterial, z. B. von Flachdächern und Fassaden verwendet werden, sie können aber auch als Isolationsmittel bei technischen Gegenständen, z. B. Industrieöfen auch bei recht hohen Temperaturen bis zu 1000 - 1200° C Verwendung finden.

Da die erzeugten Strukturkörper, die z. B. auch die Form von Kügelchen haben können, fast keinen Alkaligehalt aufweisen, sind sie als betonverträglich auch als Betonzuschlagstoff verwendbar.

Die Wichte der erzeugten Strukturkörper kann durch die Schäumtemperatur sowie den Anteil des Ferrosiliziumnitrids eingestellt werden, sie liegt zwischen 0,2 und 0,8 g/cm$^3$.

Bei dem erfindungsgemäßen Verfahren ist es vorteilhaft, zusätzlich zu dem Ferrosiliziumnitrid ein Oxidationsmittel wie $MnO_2$ zu verwenden. Bei sehr hohen Schmelzpunkten

7

kann dem Gemisch auch noch ein Flußmittel wie Natronlauge oder Soda zugesetzt werden.

Für den Fachmann ist überraschend, daß aus den scheinbaren Abfallstoffen ein hochwertiger Isolationskörper bzw. Baustoff gewonnen werden kann. Verwendbar sind in diesem Zusammenhang nicht nur Flugaschen, sondern eine große Zahl von glasbildenden Abfallstoffen.

Besonders vorteilhaft ist, daß das erfindungsgemäße Verfahren einfach durchführbar ist und einen derzeitigen Abfallstoff in einen hochwertigen Baustoff umzuwandeln vermag. Es kann also von einer idealen Lösung der anstehenden Probleme gesprochen werden, da die Abfallstoffe bei diesem Prozeß bis zu einer Temperatur aufgeheizt werden, bei welcher ein erheblicher Prozentsatz an Glasphase entsteht und dadurch in diesen Abfallstoffen enthaltene Schwermetalle als Silikate in das Glas eingebunden werden, wodurch sie vollkommen ungiftig werden.

Patentansprüche:

1. Verfahren zum Aufschäumen von glasbildenden Mineralstoffen, insbesondere Abfallstoffen wie z. B. Flugaschen, Schlick, Kiesschlamm, Flotationsrückständen, Müllaschen etc., dadurch gekennzeichnet, daß den Stoffen Ferrosiliziumnitrid beigemischt und die Mischung bei der Erweichungstemperatur der Stoffe aufgeschäumt wird.

2. Verfahren nach Anspruch 1, dadurch gekennzeichnet, daß der Anteil des Ferrosiliziumnitrids an der Mischung 0,5 bis 3 Gew.-% beträgt.

3. Verfahren nach Anspruch 1 oder 2, dadurch gekennzeichnet, daß die Schäumtemperatur über 1000 und unter 1300° C liegt.

4. Verfahren nach Anspruch 3, dadurch gekennzeichnet, daß die Schäumtemperatur ca. 1100 - 1250° C beträgt.

5. Verfahren nach einem der vorhergehenden Ansprüche, dadurch gekennzeichnet, daß als Flugasche die der letzten Stufe der Flugaschefilterung verwendet wird.

6. Verfahren nach einem der Ansprüche 1 bis 5, dadurch gekennzeichnet, daß das Schäummittel mit der Glasphase des zu schäumenden Materials bei der zum Schäumen erforderlichen Viskosität der Glasphase unter Gasbildung chemisch reagiert.

7. Verfahren nach einem der Ansprüche 1 bis 6, dadurch gekennzeichnet, daß zur Optimierung des Prozesses ein Schäummittelgemisch aus Ferrosiliziumnitrid, Oxidationsmittel und Flußmittel den zu schäumenden Stoffen beigemischt wird.

8. Verfahren nach einem der Ansprüche 1 bis 7 zum Aufschäumen von mit Schaummitteln vermischten Mineralstoffteilchen (Pellets), insbesondere Flugasche durch Erhitzung auf Schäumtemperatur und Austrag aus den zum Schäumen benutzten Ofen, dadurch gekennzeichnet, daß die Teilchen bis zur ausreichenden Aufschäumung durch eine Strömung der Verbrennungsluft, des zur Verbrennung dienenden Gases und der Verbrennungsgase schwebend gehalten werden und sich während dieses Zeitraumes auf die Austragsöffnung des verwendeten Ofens zubewegen.

9. Verfahren nach Anspruch 8, dadurch gekennzeichnet, daß die Teilchen nach ihrem Austrag durch einen Luftstrom abgekühlt werden, wobei dieser zum Vorheizen und Trocknen des pellitisierten Schäumgutes dient.

10. Verfahren nach einem der Ansprüche 8 und 9, dadurch gekennzeichnet, daß die Ofenwandungen durch Luft gekühlt wird, die dem Ofenraum wieder als Verbrennungsluft zugeführt wird.

11. Ofen zur Durchführung des Verfahrens nach einem der Ansprüche 8 bis 10, dadurch gekennzeichnet, daß er langgestreckt ist, eine Eingabeöffnung für die Pellets an einem Ende und eine austragsöffnung für die geschäumten Teilchen an seinem anderen Ende aufweist und sein Querschnitt V-förmig ist, wobei die Spitze nach unten weist und eine Öffnung für den Einlaß von Luft und/oder zur Verbrennung dienenden Gas aufweist.

12. Ofen nach Anspruch 11, dadurch gekennzeichnet, daß er geneigt angeordnet ist und seine Längsachse in einer vertikalen Ebene verschenkbar ist.

13. Ofen nach Anspruch 12, dadurch gekennzeichnet, daß die Neigung zum Austragsende hin besteht.

14. Ofen nach einem der Ansprüche 11 bis 13, dadurch gekennzeichnet, daß das Verbrennungsgas und das Schäumgut im Gegenstrom geführt wird.

15. Ofen nach einem der Ansprüche 11 bis 14, dadurch gekennzeichnet, daß er in eine Erhitzungszone (6 - 7), Schäumzone (4) und Kühlzone (1 - 3) gegliedert ist, wobei zwischen diesen Strahlenschutzwände (10) angeordnet sind, die den Bodenbereich des Ofens zum Durchtritt von Luft, Gas und Schaufgut freilassen.

16. Ofen nach Anspruch 15, dadurch gekennzeichnet, daß innerhalb der Kühl- und der Erhitzungszone weitere Strahlenschutzwände vorliegen.

17. Ofen nach Anspruch 15 oder 16, dadurch gekennzeichnet, daß die Luft innerhalb der Kühlzone (1) umgewälzt wird, während die Schäum- und die Kühlzone im Gegenstrom durchströmt wird.

## Fig.1

Materialzufuhr

13

~1~  ~2~  ~3~  ~4~  ~5~  ~6~  ~7~  ~8~

10  11

~9~

12

14  14

Gaszufuhr

Materialanstrag

0242872

1/2

Fig.2

13

11

14

Fig.3

14

0242872

# EUROPÄISCHER RECHERCHENBERICHT

EP 87105911.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | EP - A1 - 0 134 584 (FEHLMANN)<br><br>* Ansprüche; Seite 11, Zeile 23 - Seite 12, Zeile 27; Seite 14, Zeilen 4-25<br><br>---- | 1,3,4, 6,11 | C 03 B 19/08<br>C 03 B 5/00<br>C 03 C 11/00<br>C 04 B 5/06<br>C 04 B 38/02<br>C 04 B 20/04 |

RECHERCHIERTE SACHGEBIETE (Int C 4)

C 04 B

C 03 B

C 03 C

Der vorliegende Recherchenbericht wurde für alle Patentansprüche erstellt

| Recherchenort | Abschlußdatum der Recherche | Prüfer |
|---|---|---|
| WIEN | 14-07-1987 | BECK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82